(19) Europäisches Patentamt
European Patent Office
Office européen des brevets

(11) Numéro de publication: **0 124 152**
**A1**

(12) **DEMANDE DE BREVET EUROPEEN**

(21) Numéro de dépôt: **84200418.6**

(22) Date de dépôt: **23.03.84**

(51) Int. Cl.³: **B 21 D 39/02**, B 23 Q 7/04

(30) Priorité: **31.03.83 LU 84728**

(43) Date de publication de la demande: **07.11.84**
**Bulletin 84/45**

(84) Etats contractants désignés: **IT**

(71) Demandeur: **SPIRO INVESTMENT S.A., Industriestrasse, CH-3178 Bösingen (CH)**

(72) Inventeur: **Rosy, Etienne, Rue de Bomal 7, B-5940 Ramillies (BE)**
Inventeur: **Lagasse, Paul-Emile, Rue de la Neuveville 70, B-1348 Louvain-la-Neuve (BE)**

(74) Mandataire: **Van Malderen, Michel et al, p.a. Freylinger & Associés 22 avenue J.S. Bach (bte 43), B-1080 Bruxelles (BE)**

(54) **Perfectionnement aux dispositifs d'assemblage de corps creux par sertissage.**

(57) Le dispositif comporte un mandrin d'appui (17) qui s'adapte à la surface intérieure des éléments à assembler qui reposent sur quatre galets d'appui, et un galet de sertissage (20) composé d'un galet support (21), d'un galet de prépliage (23) et d'un galet d'écrasement (22).

Le dispositif permet l'assemblage par sertissage vertical simple d'éléments tubulaires, éventuellement courbes, à symétrie de révolution ou d'éléments creux de forme quelconque.

1
17
6
19
2
20
22
23
27
21
26
25

EP 0 124 152 A1

0124152

Perfectionnement aux dispositifs d'assemblage de corps creux par sertissage.

La présente invention concerne un dispositif permettant d'assembler par sertissage vertical (simple) deux corps creux à paroi mince, éventuellement à symétrie de révolution, notamment des tubes, coudes ou éléments de réduction coniques destinés au transport de l'air dans une installation de climatisation, par exemple.

On connaît divers dispositifs permettant d'obtenir un assemblage agrafé ou serti linéaire ou courbe, présentant cependant des difficultés diverses au fonctionnement.

La présente invention vise à fournir un autre dispositif du type susmentionné.

Le but de la présente invention est atteint en fournissant un dispositif d'assemblage de corps creux par sertissage vertical caractérisé en ce qu'il comporte un mandrin d'appui monté sur un support rotatif adéquat adapté aux éléments à assembler, qui repose sur au moins trois points d'appui qui sont déplaçables en fonction de la dimension des éléments à assembler, et un galet de sertissage composé d'au moins deux éléments, à savoir un galet support et un galet d'écrasement, ces deux galets étant montés de manière à pouvoir être déplacés en direction du mandrin d'appui pour effectuer un prépliage par déformation entre deux lèvres fixes, ces deux galets pouvant également être rapprochés l'un de l'autre pour permettre le sertissage des bords des éléments à assembler, l'un au moins des éléments, galets et mandrin, précités pouvant être entraîné en rotation par un organe moteur.

Suivant l'invention, l'opérateur dépose les éléments à assembler l'un sur l'autre sur les points d'appui de telle sorte que le mandrin d'appui soit appliqué contre la surface intérieure adjacente aux joints des deux éléments à assembler. Ensuite on amène le galet de sertissage composé d'au moins deux pièces contre la paroi extérieure des éléments à assembler de manière à écraser et sertir les bords des éléments.

En général, il suffit que le galet de support soit entraîné par un moteur, les autres éléments tels que le mandrin et les pièces à assembler étant entraînés par frottement.

Dans le cas où cet entraînement ne suffirait pas, on peut entraîner le mandrin d'appui et le galet de sertissage de telle manière que les vitesses circonférencielles soient identiques.

Suivant l'invention, les éléments à assembler doivent présenter des extrémités particulières. L'extrémité de l'un des éléments à assembler présente par exemple un bord replié perpendiculairement à la paroi ; l'autre élément présente une section affectant globalement la forme d'un U dans lequel s'emboîte le premier élément, les montants du U étant repliés et sertis sur le bord du premier élément.

D'autres détails et avantages du dispositif de la présente invention apparaîtront plus clairement dans la description d'un mode d'exécution préféré appuyé sur les figures annexées dans lesquelles :

- la figure 1 représente une vue schématique du dispositif de l'invention suivant un premier mode d'exécution;
- la figure 2 est une vue en plan schématique de la figure 1.

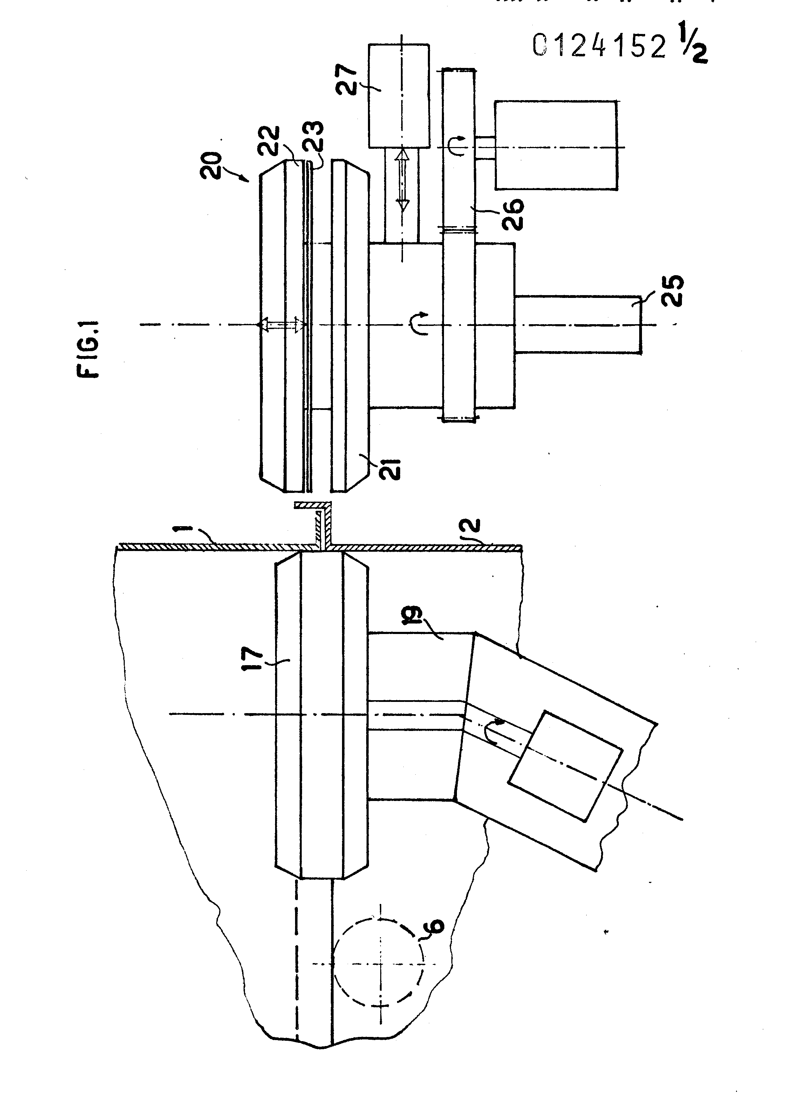

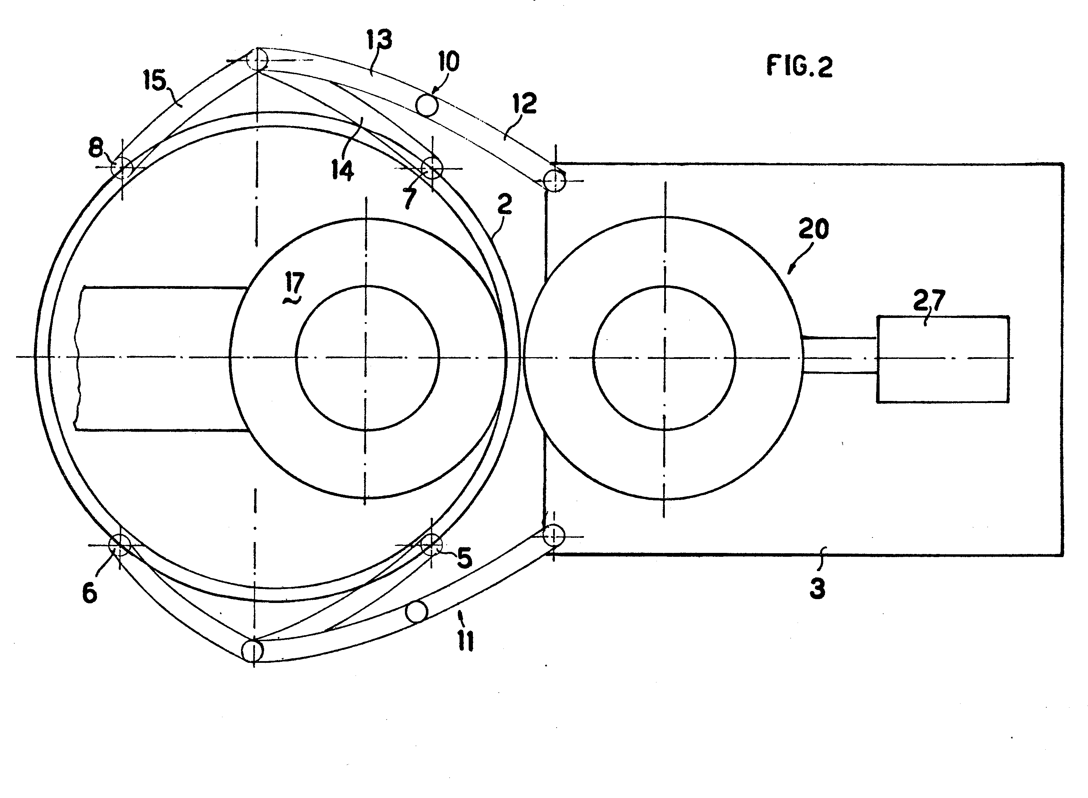

A la figure 1, les éléments à assembler 1 et 2 présentant une section adéquate reposent sur au moins trois points d'appui. Suivant un mode d'exécution particulièrement préféré, les éléments à assembler 1 et 2 reposent sur quatre points d'appui 5, 6, 7 et 8 (figure 2) disposés sur deux bras 10 et 11 orientables et règlables en fonction des dimensions, à savoir le diamètre, des éléments à assembler, les bras 10 et 11 étant fixés aux parties 3 de la machine.

Avantageusement, les bras 10 et 11 sont constitués par au moins deux parties assemblées par une articulation. De préférence, ils consistent chacun en une première partie 12 sur laquelle est articulée une deuxième partie 13 dont l'extrémité opposée à la partie 12 comporte une articulation de laquelle partent deux branches orientables 14 et 15 se terminant par un petit galet (5, 6, 7, 8) servant de point d'appui aux bords en U de l'un des éléments à assembler.

Le mandrin d'appui 17 est disposé à l'intérieur des éléments 1 et 2 et est appliqué contre la surface intérieure desdits éléments. Le galet d'appui 17 est monté sur un support rotatif 19 affectant une forme particulière adéquate permettant la rotation d'éléments courbes 2 possédant un angle allant jusqu'à 45 ° ou plus.

Suivant l'invention, le galet de sertissage 20 est composé d'au moins deux galets parallèles, à savoir un galet support 21 et un galet de sertissage ou d'écrasement 22 ayant sensiblement le même diamètre que le galet 21. Suivant un mode d'exécution particulièrement préféré, il comporte encore un troisième galet de même orientation, à savoir un galet de prépliage 23. Ce dernier consiste avantageusement en un matériau élastique. Avantageusement, les galets supports 21 et de prépliage 23 ou d'écrasement 22 peuvent être écartés l'un de l'autre suivant leur axe commun, au moyen d'un vérin 25, par exemple. Le galet de sertissage 20 comprenant les différentes parties 21, 22, 23 est avantageusement entraîné par un organe moteur 26.

En fonctionnement, lorsque les éléments à assembler 1 et 2 sont disposés correctement et lorsque les galets 21 et 23 sont écartés, on amène le galet de sertissage 20 contre les éléments à assembler au moyen d'un vérin 27. L'écartement des galets et/ou la présence du galet de prépliage 23 permettent d'effectuer une ou plusieurs encoches dans le bord en forme de U par déformation entre deux lèvres. Ces encoches empêchent le mouvement relatif d'un élément par rapport à l'autre, lors du sertissage (écrasement) en continu effectué ultérieurement.

Ensuite, les galets 21 et 23 et/ou 22 sont rapprochés l'un de l'autre afin d'écraser au maximum le montant du U sur le bord de l'autre élément, entre les deux faces parallèles des galets, et le galet 20 est entraîné en rotation par l'organe moteur 26 pour faire une ou plusieurs fois le tour des éléments à symétrie de révolution.

Suivant les dimensions des éléments à assembler 1 et 2 et l'épaisseur de la paroi desdits éléments, il n'est pas nécessaire d'effectuer plusieurs encoches de prépliage. Il suffit alors de faire une amorce de sertissage en écrasant le montant du U sur le bord plié de l'autre élément, avant d'entraîner le galet 20 en rotation.

Le mandrin d'appui 17 n'est, avantageusement pas entraîné par un organe moteur mais par le frottement entre lui, la paroi des éléments à assembler et le galet 20. Si nécessaire, on peut malgré tout prévoir un entraînement individuel du galet 17.

Le dispositif de la présente invention est très efficace et rapide dans l'exécution des assemblages par sertissage. Notons encore que le galet support ne sert qu'à la réaction pour l'effort d'écrasement et qu'il ne supporte pas les éléments à assembler 1, 2, lors des autres opérations.

La présente invention n'est nullement limitée aux modes d'exécution décrits en détail dans le mémoire descriptif. Elle couvre également toute modification évidente apportée au dispositif décrit.

Ainsi, le dispositif de l'invention peut, par exemple, être intégré dans une chaîne de fabrication comportant, en outre, en amont, une moulureuse permettant de former les bords nécessaires.

Il faut noter que le dispositif de l'invention présente une construction telle qu'il peut également servir à assembler des éléments qui ne sont pas de symétrie à révolution, comme un réservoir par exemple. Dans ce cas, le support 19 est rotatif et le vérin 27 présente une course telle qui permet de suivre la forme de l'assemblage à l'endroit du joint.

REVENDICATIONS

1. Dispositif d'assemblage de corps creux par sertissage vertical (simple) caractérisé en ce qu'il comporte un mandrin d'appui (17) monté sur un support rotatif (19) adéquat adapté aux éléments à assembler (1, 2) qui reposent sur au moins trois points d'appui (5, 6, 7, 8) qui sont déplaçables en fonction de la dimension des éléments à assembler (1, 2), et un galet de sertissage (20) composé d'au moins deux éléments (21, 22), à savoir un galet support (21) et un galet d'écrasement (22), ces deux galets étant montés de manière à pouvoir être déplacés en direction du mandrin d'appui (17) pour effectuer un prépliage des bords par déformation entre deux lèvres fixes, ces deux galets (21, 22) étant également rapprochables l'un de l'autre pour permettre le sertissage des bords des éléments à assembler (1, 2), l'un au moins des éléments, galets et mandrin, précités (17, 21, 22) pouvant être entraîné en rotation par un organe moteur.

2. Dispositif suivant la revendication 1 caractérisé en ce que les éléments à assembler (1, 2) reposent sur quatre points d'appui (5, 6, 7, 8) disposés sur deux bras (10, 11) de part et d'autre des éléments à assembler (1, 2), lesdits bras étant orientables et réglables en fonction de la dimension des éléments à assembler et fixés au bâti (3) de la machine, lesdits bras consistant en une première partie (12) sur laquelle est articulée une deuxième partie (13) dont l'extrémité opposée à la partie (12) comporte une articulation de laquelle partent deux branches orientables (14, 15) se terminant chacune par un petit galet (5, 6, 7, 8) servant de point d'appui aux bords en U de l'élément à assembler.

3. Dispositif suivant l'une quelconque des revendications précédentes caractérisé en ce que le mandrin d'appui (17) est monté sur un support rotatif (19) affectant une forme adéquate permettant la rotation d'éléments (2) courbes présentant un angle allant jusqu'à 45 ° et plus.

4. Dispositif suivant l'une quelconque des revendications précédentes caractérisé en ce que le galet de sertissage (20) est composé d'au moins deux galets parallèles, à savoir un galet support (21) et un galet de sertissage ou d'écrasement (22) ayant sensiblement le même diamètre que le précédent.

5. Dispositif suivant la revendication 4 caractérisé en ce que le galet de sertissage (20) comporte encore un troisième galet, un galet de prépliage (23) parallèle aux deux autres et de même axe que ceux-ci, ledit galet de prépliage (23) consistant en une matière élastique.

6. Dispositif suivant l'une quelconque des revendications précédentes caractérisé en ce que le galet de sertissage (20) est déplacé parallèlement à son axe par un vérin (27).

7. Dispositif suivant l'une quelconque des revendications précédentes caractérisé en ce que les galets (21, 22 ou 23) du galet de sertissage sont rapprochés l'un de l'autre au moyen d'un deuxième vérin (25).

8. Dispositif suivant l'une quelconque des revendications précédentes caractérisé en ce qu'on effectue le rapprochement du galet support (21) et du galet d'écrasement (22) au moyen d'un vérin.

9. Dispositif suivant l'une quelconque des revendications précédentes, caractérisé en ce que seuls les galets supports (21) et d'écrasement (22) sont entraînés en rotation par un organe moteur (26).

10. Dispositif suivant la revendication 1 caractérisé en ce que le mandrin d'appui s'adapte à une forme quelconque des éléments à assembler et que les galets de sertissage sont pressés contre ledit mandrin au moyen d'un vérin qui suit la forme des éléments à assembler à l'endroit du joint.

23.03.84



FIG.1

20 22 23 27 26 25 21 1 2 19 17 6

FIG.2
13
10
15
12
8
14
7
2
20
17
27
5
6
3
11

0124152

Office européen des brevets

# RAPPORT DE RECHERCHE EUROPEENNE

Numéro de la demande

EP 84 20 0418



## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A- 907 439 (BABCOCK) --- | 2 | |
| A | BE-A- 708 126 (MALKKI) --- | 1,2 | |
| A | GB-A-1 599 379 (JENSEN) * Figures 1-3 * --- | 1,3 | |
| A | FR-A- 947 541 (TITEFLEX) * Figures 11,12 * --- | 10 | |
| A | DE-A-2 358 177 (REINER) --- | | |
| A | DE-C- 610 711 (ZEHELEIN) --- | | |
| A | CH-A- 270 899 (RAGNAR) --- | | DOMAINES TECHNIQUES RECHERCHES (Int. Cl. 3) |
| A | DE-A-2 734 999 (WARNKE) --- | | |
| A | PATENTS ABSTRACTS OF JAPAN, vol. 6, no. 220 (M-169)[1098], 5 novembre 1982; & JP - A - 57 124 524 (NISSAN JIDOSHA K.K.) 03-08-1982 ----- | | |

Le présent rapport de recherche a été établi pour toutes les revendications

| Lieu de la recherche | Date d'achèvement de la recherche | Examinateur |
|---|---|---|
| LA HAYE | 18-06-1984 | OFFMANN P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82

0124152

Office européen des brevets

# RAPPORT DE RECHERCHE EUROPEENNE

Numéro de la demande

EP 84 20 0418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-2 460 123 (CAMILL)<br>* Colonne 1; colonne 3; figures 1,2 *<br>--- | 1,4,6-9 | B 21 D 39/02<br>B 23 Q 7/04 |
| A | US-A-4 345 866 (GREENE)<br>* Colonne 2, lignes 38-65; figures 5,6 *<br>--- | 2 | |
| A | DE-A-2 214 587 (ZELLENTIN)<br>* Revendications 2,3,4; page 6; figure 2 *<br>--- | 2 | |
| A | US-A-1 873 164 (TURNQUIST)<br>* Revendication 1; figures 6,7 *<br>--- | 4-8 | DOMAINES TECHNIQUES RECHERCHES (Int. Cl. 3) |
| A | US-A- 220 991 (ROSS)<br>* Revendications 1-5; figure *<br>--- | 4-8 | |
| A | NL-A-7 508 981 (SCHMIDLIN)<br>* Page 4, lignes 15-30; figures 1,3 *<br>--- | 1-3 | B 21 D<br>B 23 Q |
| A | DE-A-2 501 439 (OKADA)<br>* Revendication; figure 2 *<br>--- | 2 | |
| A | DE-A-1 752 573 (FRENTZEL)<br>* Page 4, figures 1,2 *<br>--- -/- | 2 | |

Le présent rapport de recherche a été établi pour toutes les revendications

| Lieu de la recherche | Date d'achèvement de la recherche | Examinateur |
|---|---|---|
| LA HAYE | 18-06-1984 | OFFMANN P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82